# FASCICULE DE BREVET EUROPEEN

(11) **EP 3 014 972 B1**
(45) Date de publication et mention de la délivrance du brevet: **04.10.2017**
(21) Numéro de dépôt: 15192133.5
(22) Date de dépôt: 29.10.2015
(51) Int. Cl.: A01D 34/73, A01B 45/02

(54) **LAME POUR APPAREIL DE MOTOCULTURE, ARBRE PORTE-LAMES, APPAREIL DE MOTOCULTURE ET PROCÉDÉ DE FABRICATION ASSOCIÉS**
KLINGE FÜR MOTORISIERTE LANDMASCHINE, ENTSPRECHENDE KLINGENWELLE, ENTSPRECHENDE MOTORISIERTE LANDMASCHINE UND ENTSPRECHENDES HERSTELLUNGSVERFAHREN
BLADE FOR MECHANISED FARMING APPARATUS, ASSOCIATED BLADE SHAFT, MOTORISED FARMING APPARATUS AND MANUFACTURING METHOD

(30) Priorité: 30.10.2014 FR 1460471
(43) Date de publication de la demande: 04.05.2016
(73) Titulaire: KIVA, 39570 Courbouzon (FR)
(72) Inventeur: VION, Peter, 85700 POUZAUGES (FR); GERBAUD, Nicolas, 85110 MONSIREIGNE (FR); WILLIEN, Nicolas, 39230 SELLIERES (FR); RENAUD, Romaric, 39570 COURBOUZON (FR); DONEY, Christophe, 71580 BEAUREPAIRE EN BRESSE (FR)
(74) Mandataire: Vidon Brevets & Stratégie

(56) Documents cités:
- BE-A3- 1 003 796
- DE-A1- 3 300 134
- NL-A- 7 317 080
- US-A1- 2012 260 508

## Description

### 1. Le domaine de l'invention

La présente invention concerne le domaine de la motoculture, notamment pour la préparation et/ou l'entretien des sols, pour les cultures et/ou les pelouses.

Plus précisément, l'invention concerne les appareils de motoculture équipés de lames montés perpendiculairement sur un arbre porte-lames entrainé en rotation, tels que les scarificateurs, les débroussailleuses, les broyeurs à végétaux, les faucheuses et les tondeuses.

L'invention concerne en particulier les lames destinées à équiper de tels appareils, leur montage et leur fabrication.

### 2. Solutions de l'art antérieur

De nombreux appareils de ce type sont connus. Bien que ces dispositifs diffèrent les uns des autres de par leur fonction ou leur mode d'utilisation, ils ont néanmoins pour caractéristique commune de disposer d'une ou plusieurs lames agencés sur un arbre, lui-même entraîné en rotation par un moteur.

Par la suite, on décrit plus précisément, à titre d'exemple, le cas des scarificateurs. Un scarificateur à conducteur marchant est équipé d'un rotor, ou arbre, tournant à grande vitesse (par exemple 3000 à 3300 tr/min) entrainé par un moteur thermique ou électrique. Ce rotor est équipé d'une pluralité de couteaux métalliques donc la fonction principale consiste à scarifier la surface du sol afin de favoriser la régénération des pousses de brin de pelouse.

De manière générale, deux types de lames sont mises en oeuvre, par exemple sur les scarificateurs actuels : les lames fixes et les lames mobiles.

Les lames fixes sont par définition solidarisées à l'arbre, par exemple par soudage ou brasage, et ne présentent aucun degré de liberté par rapport à ce dernier. De ce fait, une contrainte mécanique pouvant être exercée sur les lames, du fait de la présence d'obstacle ou d'une utilisation du dispositif sur un terrain accidenté par exemple, est directement transmise à l'arbre d'entraînement. La répercussion dans leur intégralité de chocs subis par les lames sur l'arbre a notamment pour conséquence une fragilisation dans le temps de l'ensemble du dispositif de fauchage.

Les lames mobiles sont quant à elles agencées en pivotement par rapport à l'arbre, autour de l'axe de révolution de ce dernier. Généralement, chacune des lames mobiles peut présenter un léger jeu avec l'arbre, selon l'axe de ce dernier. Compte tenu du caractère mobile de ce type de lame, les chocs mécaniques pouvant être occasionnés sur les lames ne sont pas retransmis en intégralité à l'arbre d'entraînement, une partie des contraintes étant dissipée dans le déplacement des lames par rapport à l'arbre. L'utilisation de ce type de lame permet donc de réduire les contraintes mécaniques pouvant être exercées au niveau de la surface de contact des lames et de l'arbre, améliorant par conséquent la durabilité des lames, de l'arbre porte-lames et plus généralement, du dispositif.

Les lames mobiles connues de l'état de la technique sont généralement constituées d'une tôle percée ou poinçonnée à proximité de l'une de ses extrémités longitudinales. Les documents de l'état de la technique US20120260508 et BE1003796 décrivent des lames comprenant une lumière destinée à permettre leur montage en pivotement libre autour d'un axe. C'est par le biais de la lumière résultant de la perforation de la tôle que la lame est agencée en rotation autour de l'arbre d'entraînement. La liaison pivot de la lame sur l'arbre porte-lames est donc assurée par la surface de contact du périmètre de la lumière. Or en l'espèce, cette surface de contact s'étend selon une distance sensiblement égale à l'épaisseur de la lame. L'étendue de cette surface de contact reste donc relativement faible, compte tenu de la longueur de la lame. Lors de la mise en oeuvre d'une telle lame mobile, l'ensemble des contraintes exercées sur la lame et retransmises à l'arbre se concentre donc au niveau de cette surface réduite, d'où une usure très rapide de l'arbre et de la lame.

Afin de pallier cette usure localisée, l'arbre porte-lames peut de manière préférentielle être soumis à des traitements de surface, par exemple la carbonitruration ou la trempe par induction haute fréquence, afin d'augmenter sa durée de vie. En dépit de l'application de tels traitements de surface, ce type d'assemblage conduit généralement à la rupture totale des axes de l'arbre. Il présente de plus comme inconvénients de complexifier et de rendre très onéreux le procédé de fabrication de l'arbre.

Il a également été proposé des couteaux plus endurants, mais plus complexes, dont le pivot sur l'axe de rotation est assuré via la portée cylindrique d'une bague (par exemple moulée ou usinée par procédé de tournage, puis soudé sur le couteau). La longueur de la bague (généralement de 15 à 20mm) soudée au couteau est en contact avec l'axe de rotation.

On augmente ainsi la durée de vie des axes. Cependant cette solution est très onéreuse, et les pièces de rechange sont peu accessibles.

### 3. Objectifs de l'invention

La présente invention a pour objectif de pallier ces inconvénients de l'art antérieur.

En particulier, l'invention a pour objectif, selon au moins un mode de réalisation, d'améliorer la durabilité des lames mobiles et de l'arbre porte-lames, tout en minimisant le coût et la complexité du procédé de fabrication des lames.

Un autre objectif de l'invention est, selon au moins un mode de réalisation, de limiter la masse unitaire des lames mobiles.

Un autre objectif de l'invention est, selon au moins un mode de réalisation, de limiter la présence d'amorces de rupture sur les lames.

Un autre objectif de l'invention est, selon au moins un mode de réalisation, de faciliter le processus de montage d'une lame mobile sur l'arbre porte-lames.

Un autre objectif de l'invention est, selon un autre aspect de l'invention, de permettre la mise en oeuvre à une cadence élevée d'un procédé de fabrication de lames mobiles.

### 4. Exposé de l'invention

Ces objectifs, ainsi que d'autres qui apparaitront plus clairement par la suite, sont atteints à l'aide d'une lame pour appareil de motoculture, destinée à être montée sur un arbre porte-lames, présentant une lumière cylindrique définie selon un axe de révolution pour être montée sur un arbre pivot.

Selon l'invention, ladite lame est monobloc, une portion de liaison présentant une surface de contact du périmètre de ladite lumière étant destinée à venir directement en contact avec ledit arbre porte-lames, et en ce qu'elle présente une surépaisseur locale au niveau de ladite surface de contact, dite épaisseur proximale, par rapport à l'épaisseur d'une portion de travail de ladite lame.

En d'autres termes, une lame mobile selon l'invention comprend deux portions distinctes dites « de travail » et « de liaison ». L'expression « portion de travail » telle qu'utilisée dans la description désigne essentiellement une portion sensiblement plane et allongée selon le plan de la lame, dont le pourtour correspond à celui de la lame, lorsque considéré selon ce même plan. Selon une caractéristique particulière, cette portion de travail comprend, sur une partie au moins de son pourtour, un profil biseauté dont le tranchant est destiné à sectionner de la matière végétale. L'expression « portion de liaison » désigne essentiellement une portion de la lame localisée à proximité de la lumière cylindrique et destinée à assurer la liaison entre la portion de travail et l'arbre porte-lames. Le terme « épaisseur » tel qu'utilisé dans la description désigne l'étendue de la lame selon une direction orthogonale au plan de lame.

Dans la description, le postulat selon lequel l'axe de révolution de la lumière cylindrique est orthogonal au plan de lame est exprimé à des fins de clarté, et ne doit pas être interprété de façon stricte. Les différentes affirmations faites dans la description s'appliquent cependant également au cas où cet axe de révolution serait légèrement incliné par rapport à l'axe transverse au plan de lame. Selon ce postulat, l'épaisseur proximale de la lame est sensiblement égale à la longueur de ladite lumière.

Selon l'invention, l'épaisseur proximale est donc supérieure à l'épaisseur d'une portion de travail de la lame, d'où l'utilisation du terme « surépaisseur ». De ce fait, la surface destinée à être mise en contact avec l'arbre est plus grande qu'en l'absence de surépaisseur. Les contraintes mécaniques pouvant être subies par la lame sont réparties sur une surface plus grande lors de leur transmission à l'arbre.

Cette caractéristique technique a donc pour avantage d'améliorer la durabilité des lames mobiles et de l'arbre pivot. Des tests d'endurance effectués sur des lames mobiles montées sur un arbre ont montré de plus que cet ensemble présente une durée de vie supérieure à celle des lames connues, même lorsque ces dernières ont subies un traitement surfacique au préalable. Une lame mobile selon l'invention a donc pour double avantage de présenter une amélioration significative de sa durabilité tout en ne nécessitant pas la mise en oeuvre de traitements surfaciques onéreux lors de sa phase de production.

Une lame mobile selon l'invention est monobloc, i.e. formée d'une seule pièce et non d'un assemblage permanent, par exemple par soudage, ou temporaire de pièces mécaniques. Cette caractéristique technique essentielle a pour double avantage de minimiser le coût et la complexité du procédé de fabrication des lames tout en évitant la concentration de contraintes pouvant être générées au niveau des phases de transition d'un ensemble non homogène, d'où une meilleure durabilité des lames.

Selon l'invention, la portion de liaison comprend une portion de révolution, définie selon ledit axe de révolution et liée à ladite portion de travail par une portion de transition, lesdites portions de révolution et de transition formant un dégagement.

L'expression « portion de révolution » telle qu'utilisée dans la description désigne une portion tubulaire définie autour dudit axe de révolution et dont la paroi intérieure conditionne les dimensions de la lumière cylindrique. Le terme « dégagement » désigne un évidement formé à l'intersection de deux surfaces.

Selon une caractéristique particulière, la portion de transition est solidarisée à l'une des extrémités longitudinales de la portion de révolution.

Une lame mobile conformée selon cette caractéristique particulière présente une surface de contact satisfaisante sur l'arbre, tout en minimisant sa masse totale. La masse de la lame mise en rotation étant faible, l'effort d'appui de la portion de révolution sur l'arbre dû à la force centrifuge est faible également. L'arrachement de matière par frottement est ainsi réduit, au profit de la durabilité de l'arbre.

Selon une caractéristique particulière, la portion de liaison présente une forme emboutie en cuvette à cylindre refoulé.

Une lame selon cette caractéristique particulière peut être mise en forme par emboutissage. Le terme « emboutissage » désigne un procédé de mise en forme consistant à travailler une plaque de métal en la martelant ou en la comprimant pour la courber, l'arrondir. Ce procédé a pour avantages d'être économique lorsque mis en oeuvre à grande échelle et de présenter des cadences de production élevées.

Selon une caractéristique particulière, l'épaisseur proximale de la lame est supérieure ou égale à 0,33 fois le diamètre de la lumière cylindrique.

Selon une caractéristique particulière, la portion de liaison ne présente pas de zone de striction.

Le terme « striction » tel qu'employé dans la description désigne le phénomène de rétrécissement transversal local, ou étranglement, de la lame. Les zones de striction sont propices à l'amorçage de fissures. Leur suppression permet en conséquence d'améliorer la résistance mécanique d'une pièce et donc sa durabilité.

Selon une caractéristique particulière, la lame est symétrique, de façon à pouvoir être montée indifféremment dans un sens ou dans l'autre sur ledit arbre porte-lames.

La mise en oeuvre d'une lame symétrique permet de pallier le risque d'inversion du sens de la lame, lors de son montage sur l'arbre, ce qui rend plus aisé le processus de montage. De plus, compte tenu de son caractère symétrique, un utilisateur peut volontairement inverser le sens d'une telle lame au cours de son cycle d'utilisation, dans l'objectif de solliciter de manière homogène les différentes parties de cette dernière.

L'invention concerne également un arbre porte-lames pour appareil de motoculture. Selon l'invention, cet arbre porte-lames comprend au moins une portée cylindrique apte à permettre la fixation d'au moins une lame telle que décrite ci-dessus, au niveau de ladite lumière.

Pour permettre la fixation effective d'une lame sur l'arbre porte-lames, ce dernier comprend une portée cylindrique présentant une complémentarité de forme avec au moins une partie de la portion de liaison de la lame.

Selon une caractéristique particulière, la portée présente la forme d'un évidement circulaire.

Cette conformation de la portée permet l'engagement au sein de l'arbre d'une partie de la portion de liaison de la lame. La surface de la lame en contact avec l'arbre ne se limite donc pas au pourtour de la lumière cylindrique et permet ainsi une répartition substantielle des contraintes mécaniques transmises par la lame à l'arbre.

Selon une caractéristique particulière, le diamètre de la portée est inférieur au diamètre de la lumière et la différence entre ces deux diamètres est inférieure ou égale à 0,3 mm.

Cet ajustement entre la lame et l'arbre permet de garantir une bonne durée de vie de ce dernier tout en permettant un agencement aisé des lames sur l'arbre lors de la phase d'assemblage.

L'invention concerne également un appareil de motoculture mettant en oeuvre au moins une lame selon l'invention.

Selon une caractéristique particulière, l'appareil de motoculture appartient au groupe comprenant les scarificateurs, les faucheuses à plateaux de coupe, les débroussailleuses à fléaux, les broyeurs à végétaux, les débroussailleuses à dos, les tondeuses à conducteur marchant, les tracteurs tondeuses autoportées et les tondeuses autonomes.

L'invention concerne également un procédé de fabrication d'une lame selon l'invention, caractérisé en ce qu'il comprend une étape d'emboutissage de ladite lame.

Selon une caractéristique particulière, le procédé de fabrication comprend les étapes suivantes, appliquées successivement sur une tôle métallique : perforation, pré découpage, emboutissage et séparation.

Ces différents procédés ont pour avantage de pouvoir être intégrés au sein d'un même procédé de fabrication général, mettant en oeuvre une mise en bande. La mise en bande a pour avantage de minimiser la production de déchets industriels.

### 5. Exposé des figures

L'invention sera mieux comprise à la lecture de la description suivante de modes de réalisation particuliers, donnés à titre illustratif et non limitatif, et accompagnés de figures, parmi lesquelles :
- la figure 1 est une vue en perspective d'un scarificateur selon un mode de réalisation de l'invention ;
- la figure 2 est une vue en perspective montrant la face inférieure d'un scarificateur selon un mode de réalisation de l'invention ;
- la figure 3 est une vue en perspective d'un rotor selon un mode de réalisation de l'invention ;
- la figure 4 est une vue en coupe d'un rotor selon un mode de réalisation de l'invention ;
- la figure 5 est une vue en perspective d'une lame mobile selon un mode de réalisation de l'invention ;
- la figure 6 est une vue de face d'une lame mobile selon un mode de réalisation de l'invention ;
- La figure 7 est vue de profil, en coupe A-A, de la lame mobile de la figure 6 ;
- La figure 8 est vue de détail à l'échelle 1 :2 de la partie B de la figure 7 ;
- La figure 9 est une vue schématique de face d'une portion de travail de lame mobile selon un mode de réalisation alternatif;
- La figure 10 est une vue schématique de face d'une portion de travail de lame mobile selon un mode de réalisation alternatif;
- La figure 11 est une vue schématique de face d'une portion de travail de lame mobile selon un mode de réalisation alternatif;
- La figure 12 est une vue schématique de face d'une portion de travail de lame mobile selon un mode de réalisation alternatif;
- La figure 13 est une vue schématique d'une multitude de lames mobiles agencées sur un même arbre porte-lames ;
- La figure 14 est une vue en perspective d'une mise en bande selon un mode de réalisation de l'invention ;
- La figure 15 est vue de détail à l'échelle 1:2 de la partie B de la figure 4.

### 6. Description détaillée d'un mode de réalisation

Sur les figures, les échelles et proportions ne sont pas systématiquement respectées et ce, à des fins d'illustration et de clarté.

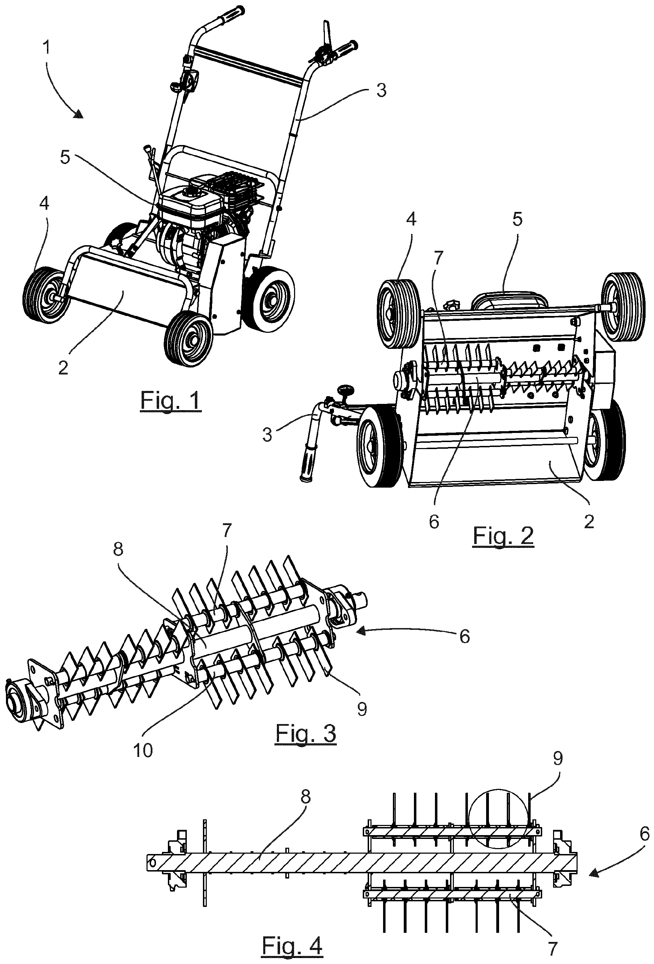

Les figures 1 et 2 illustrent un scarificateur 1 à conducteur marchant selon un mode de réalisation de l'invention. Un tel scarificateur 1 comprend un carter 2, un levier de commande 3 et quatre roues 4 permettant son déplacement. Le carter 2 est surmonté d'un moteur 5 thermique (ici par exemple un moteur de marque Honda™ industriel GX 160 OHV™) qui entraîne en rotation, par l'intermédiaire d'une courroie de transmission, un rotor 6 agencé sous le carter 2, selon une direction sensiblement parallèle au sol. Ledit rotor 6, illustré par les figures 3 et 4, comprend quatre arbres porte-lames 7 agencés deux à deux de part et d'autre d'un pivot central 8. Sept lames mobiles 9 sont montées sur chacun des arbres 7 et orientées selon une direction distale. Ces lames 9 sont séparées les unes des autres par des entretoises 10 qui permettent de les maintenir dans un écartement constant tout en contribuant à leur fixation sur l'arbre 7.

Il est à noter que le scarificateur 1 ne constitue qu'un exemple non limitatif de mode de réalisation de l'invention, décrit à simple titre illustratif. Ainsi, l'invention peut également être mis en oeuvre dans le cadre d'une faucheuse à plateaux de coupe, d'une débroussailleuse à fléaux, d'un broyeur à végétaux, d'une débroussailleuse à dos, d'une tondeuse à conducteur marchant, d'un tracteur tondeuse autoportée, d'une tondeuse autonome ou, plus généralement, de tout instrument de coupe de végétaux répondant à un problème technique analogue.

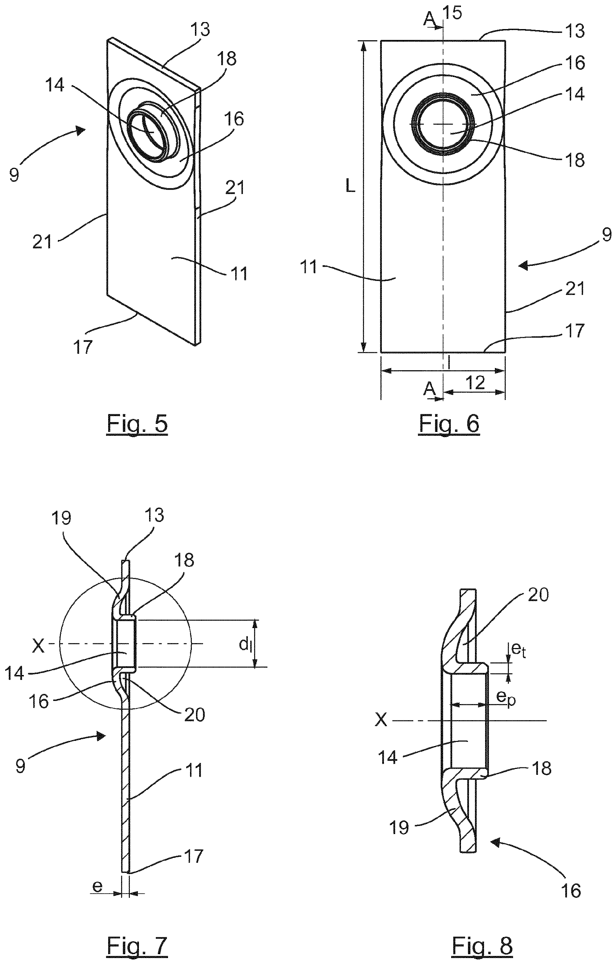

Les figures 5 à 8 illustrent une lame mobile monobloc selon un mode de réalisation de l'invention. Tel que représenté sur la figure 6, le pourtour de la lame mobile 9, lorsque considéré selon une vue de face, est défini par sa portion de travail 11. Cette portion de travail 11 correspond à une portion plane rectangulaire de tôle 32 métallique, qui s'étend selon un plan de lame 12 et présente une longueur L de 80,50 ± 0,20 mm, une largeur I de 32 mm et une épaisseur de lame e de 2 mm.

Cette portion de travail 11 comprend à proximité de l'une de ses extrémités longitudinales, dite extrémité proximale 13, une lumière 14 cylindrique, définie selon un axe de révolution X orthogonal au plan de lame 12 et dont le centre est agencé sur la médiane longitudinale 15 de la lame, autour de laquelle s'étend une portion de liaison 16. Tel que représenté par les figures 7 et 8, le centre de la lumière 14 est agencé à une distance de 21 ± 0,20 mm de l'extrémité proximale 13 et de 59 ± 0,20 mm de l'extrémité longitudinale opposée, dite extrémité distale 17. Le diamètre de la lumière est de 12,20 ± 0,20 mm.

La portion de liaison 16 présente une forme emboutie en cuvette à cylindre refoulé. Ainsi, la portion de liaison 16 comprend, en contact avec la lumière 14, une portion de révolution 18, définie autour de l'axe de révolution X de la lumière. La surface en contact avec la lumière 14 présente une épaisseur proximale eₚ de 4,50 ± 0,500 mm et une épaisseur de tôle et de 1,40 ± 0,500 mm. L'une des extrémités de la portion de révolution 18 est liée à la portion de travail 11 par l'intermédiaire d'une portion de transition 19 incurvée. Les portions de transition 19 et de révolution 18 forment un dégagement 20. Les extrémités de la surface en contact avec la lumière 14 s'étendent respectivement à une distance A de la face arrière de la portion de travail 11 et à une distance B, égale à A ± 0,5 mm, de la face avant de la portion de travail 11.

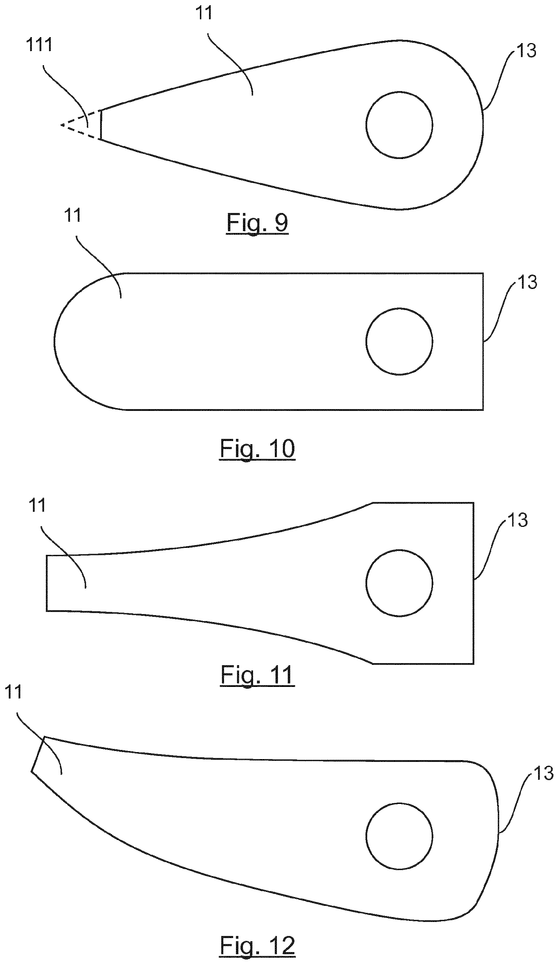

Il est à noter que la présente lame mobile ne constitue qu'un exemple non limitatif de mode de réalisation de l'invention, décrit à simple titre illustratif. Les figures 9 à 12 illustrent des solutions alternatives de formes, symétriques ou non, pouvant être adoptées pour la portion de travail 11 de la lame 9.

Ainsi, la figure 9 illustre une lame taillée en pointe dont l'extrémité 111 peut être légèrement inclinée par rapport au plan de lame 12. Dans une variante, cette pointe 111 peut être absente.

La figure 10 illustre une lame dont l'extrémité distale est arrondie.

La figure 11 illustre une lame dont les deux côtés latéraux 21 sont incurvés à proximité de l'extrémité distale.

La figure 12 illustre une lame qui présente une forme cintrée à proximité de son extrémité distale.

Compte tenu du fait que l'invention réside principalement dans la conformation de la portion de liaison 16, l'invention ne se limite à aucune forme particulière de portion de travail 11, à condition que cette dernière présente, au moins à proximité de la portion de liaison 16, une zone sensiblement plane et d'épaisseur constante.

Selon un raisonnement analogue, le profil de la portion de travail 11 de la lame peut présenter différentes conformations, en particulier à proximité de son extrémité distale 17. Selon un mode de réalisation de l'invention, le profil de la lame comprend à proximité de son extrémité distale 17 un profil biseauté continu dont l'extrémité forme une pointe effilée s'étendant selon la largeur l de la lame. De manière alternative ou en combinaison, un tel profil biseauté peut également être présent au niveau d'un des côtés latéraux 21 de la lame, de manière à ce que sa pointe effilée s'étende selon la longueur L de la lame 9.

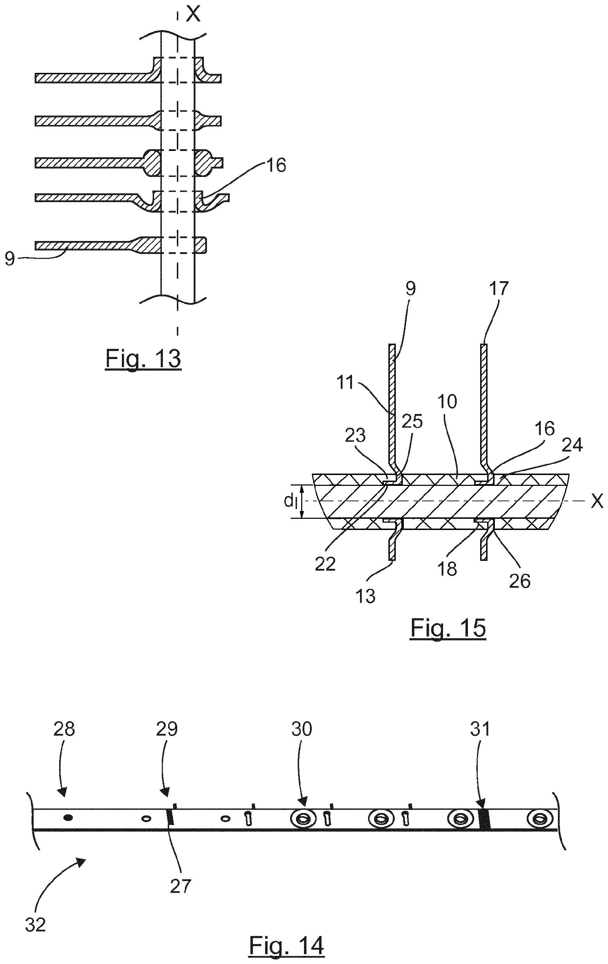

La figure 13 illustre des exemples de variantes de formes, non couvertes par les revendications, pouvant être adoptées par la portion de liaison 16 de la lame.

Selon un mode de réalisation de l'invention, la lame mobile 9 est composée d'un acier haute résistance faiblement allié de marque Docol 500 LA™, ayant subi un traitement surfacique de type zingage au Chrome III. De manière alternative, la lame mobile 9 est composée d'un feuillard d'acier au carbone recuit de désignation AFNOR symbolique XC 68, d'une dureté de 42/48 HRC, et ayant subi un traitement surfacique de type zingage au Chrome III. Ces aciers ont pour avantage de présenter une bonne déformation par emboutissage (absence de fissures) ainsi qu'une bonne résistance à l'usure.

L'invention ne se limite cependant pas à ce type de matériaux. Les lames peuvent ainsi être composées, de manière alternative et non limitative, d'alliages d'acier, d'alliages d'aluminium, d'aramide ou de zamak. L'invention ne se limite pas non plus à un traitement thermique ou surfacique particulier. Peuvent ainsi être mis en oeuvre des traitements de type trempe, suivie ou non d'un revenu, carbonitruration, phosphatation, zingage, revêtement TiN (dépôt physique de nitrure de titane), dépôts de chrome dur, nitruration ionique.

Selon un mode de réalisation particulier, le procédé de fabrication des lames intègre une mise en bande. Selon ce procédé illustré par la figure 14, différentes lames 9 sont disposées consécutivement, chacune d'entre elle étant reliée au niveau de ses extrémités longitudinales à une autre lame, par l'intermédiaire d'un pas 27.

Dans un premier temps, une tôle 32 ayant la largeur l de la lame mobile à obtenir est perforée 28 le long de sa médiane longitudinale 15. Dans un deuxième temps, une prédécoupe 29 est effectuée aux extrémités longitudinales (13 ; 17) de la lame 9, afin notamment de former les pas 27. Dans un troisième temps, la tôle 32 est emboutie 30 afin de former la portion de liaison 16 en forme de cuvette à cylindre refoulé. Dans un quatrième temps, la tôle 32 est sectionnée 31 au niveau des pas 27 afin de séparer les lames 9 les unes des autres. Ce procédé de mise en bande a pour avantage de permettre la fabrication de lames 9 à des cadences très élevées, tout en minimisant la production de déchets.

L'invention ne se limite cependant pas à ce seul procédé de fabrication et les lames mobiles selon l'invention peuvent également être produites par d'autres types de procédés, tels que la découpe en cisaille suivie de l'emboutissage à la presse mécanique, la découpe laser suivie de l'emboutissage à la presse mécanique, l'usinage dans la masse, le moulage en fonderie ou par injection sous pression, la découpe suivie d'un fluoperçage ou fluotournage, le forgeage, ou la frappe à froid.

La figure 15 illustre le détail de l'assemblage de deux lames mobiles 9 à un arbre 7. Selon le mode de réalisation illustré, chacune des lames est solidarisée, au niveau du périmètre de sa lumière cylindrique, avec une portée 22 de diamètre dₗ inférieur à celui de ladite lumière 14. Des entretoises 10 cylindriques, montées sur l'arbre 7 entre chaque lame 9, maintiennent un écartement constant entre ces dernières. Ces entretoises 10 comprennent au niveau de leurs extrémités longitudinales des formes 23 et 24 respectivement complémentaires des faces avant 25 et arrière 26 de la portion de liaison 16.

Ainsi, l'extrémité longitudinale de l'entretoise 10 en contact avec la face avant 25 de la portion de liaison 16 de la lame présente une forme de couronne en saillie sur l'arbre 7, dite de collet. Cette forme de collet permet à l'entretoise 10 de s'engager dans le dégagement 20 formé dans la portion de liaison 16 de la lame, de manière à maintenir cette dernière en contact avec l'arbre 7. L'entretoise 10 permet de plus d'absorber une partie des efforts mécaniques transmis par la lame 9, de manière à réduire les efforts générés au niveau de la portée 22, et ainsi d'améliorer la durabilité de l'arbre 7.

Le procédé d'assemblage des lames mobiles 9 à l'arbre 7 consiste à insérer alternativement autour de l'arbre 7 des lames 9 et des entretoises 10. Selon un mode de réalisation particulier, le diamètre de la portée est inférieur au diamètre dₗ de la lumière 14 et la différence entre ces deux diamètres est inférieure ou égale à 0,3 mm. Cet ajustement entre la lame 9 et l'arbre 7 permet de garantir une durée de vie optimale de ce dernier tout en permettant une insertion aisée des lames 9 sur l'arbre 7 lors de la phase d'assemblage.

Une série de tests de résistance à l'usure effectués sur les lames mobiles 9 représentées par les figures 5 à 8 et 15 et composées de Docol 500 LA™ ou de XC 68 Recuit ont permis de mettre en évidence l'excellente durabilité de ces lames.

## Revendications

1. Lame (9) pour appareil de motoculture, destinée à être montée sur un arbre porte-lames (7), présentant une lumière (14) cylindrique définie selon un axe de révolution (X) pour être montée sur un arbre pivot, ladite lame (9) étant monobloc, une portion de liaison (16) présentant une surface de contact du périmètre de ladite lumière (14) étant destinée à venir directement en contact avec ledit arbre porte-lames (7), ladite lame présentant une surépaisseur locale au niveau de ladite surface de contact, dite épaisseur proximale (e p), par rapport à l'épaisseur d'une portion de travail (11) de ladite lame (9), **caractérisé en ce que** ladite portion de liaison (16) comprend une portion de révolution (18), définie selon ledit axe de révolution (X) et liée à ladite portion de travail (11) par une portion de transition (19), lesdites portions de révolution (18) et de transition (19) formant un dégagement (20).

2. Lame (9) selon la revendication 1, **caractérisé en ce que** ladite portion de transition (19) est solidarisée à l'une des extrémités longitudinales (13 ;17) de ladite portion de révolution (18).

3. Lame (9) selon la revendication 2, **caractérisé en ce que** ladite portion de liaison (16) présente une forme emboutie en cuvette à cylindre refoulé.

4. Lame (9) selon l'une des revendications 1 à 3, **caractérisée en ce que** ladite épaisseur proximale (eₚ) est supérieure ou égale à 0,33 fois le diamètre (dₗ) de ladite lumière (14) cylindrique.

5. Lame (9) selon l'une des revendications 1 à 4, **caractérisée en ce que** ladite portion de liaison (16) ne présente pas de zone de striction.

6. Lame (9) selon l'une quelconque des revendications 1 à 5, **caractérisé en ce qu'**elle est symétrique, de façon à pouvoir être montée indifféremment dans un sens ou dans l'autre sur ledit arbre porte-lames (7).

7. Assemblage d'au moins une lame (9) selon les revendications 1 à 6 et d'un arbre porte-lames (7) pour appareil de motoculture **caractérisé en ce qu'**il comprend au moins une portée (22) cylindrique apte à permettre la fixation de ladite lame (9) au niveau de ladite lumière (14).

8. Assemblage selon la revendication 7, **caractérisé en ce que** ladite portée (22) présente la forme d'un évidemment circulaire.

9. Assemblage selon l'une des revendications 7 et 8, **caractérisé en ce que** le diamètre de ladite portée (22) est inférieur au diamètre (dₗ) de ladite lumière (14) et **en ce que** la différence entre ces deux diamètres est inférieure ou égale à 0,3 mm.

10. Appareil de motoculture mettant en oeuvre au moins un assemblage selon l'une quelconque des revendications 7 à 9.

11. Appareil de motoculture selon la revendication 10, **caractérisé en ce qu'**il appartient au groupe comprenant :
- Les scarificateurs,
- Les faucheuses à plateaux de coupe,
- Les débroussailleuses à fléaux,
- Les broyeurs à végétaux,
- Les débroussailleuses à dos,
- Les tondeuses à conducteur marchant,
- Les tracteurs tondeuses autoportées,
- Les tondeuses autonomes.

12. Procédé de fabrication d'une lame (9) selon l'une de revendications 1 à 8, **caractérisé en ce qu'**il comprend une étape d'emboutissage (30) de ladite lame (9).

13. Procédé selon la revendication 12, **caractérisé en ce qu'**il comprend les étapes suivantes, appliquées successivement sur une tôle (32) métallique :
- Perforation (28);
- Prédécoupage (29);
- Emboutissage (30);
- Séparation (31).

## Patentansprüche

1. Klinge (9) für ein motorisiertes Gartengerät, die dazu bestimmt ist, auf einer Klingentragwelle (7) angebracht zu werden, und eine längs einer Rotationsachse (X) definierte zylindrische Öffnung (14) aufweist, um auf einer Drehwelle angebracht zu werden, wobei die Klinge (9) aus einem Stück besteht, wobei ein Verbindungsabschnitt (16) eine Kontaktfläche des Umfangs der Öffnung (14) aufweist, die dazu bestimmt ist, direkt in Kontakt mit der Klingentragwelle (7) zu kommen, wobei die Klinge an der Kontaktfläche eine lokale Verdickung, als proximale Dicke (eₚ) bezeichnet, bezüglich der Dicke eines Arbeitsabschnitts (11) der Klinge (9) aufweist, **dadurch gekennzeichnet, dass** der Verbindungsabschnitt (16) einen Rotationsabschnitt (18) umfasst, der längs der Rotationsachse (X) definiert ist und mit dem Arbeitsabschnitt (11) durch einen Übergangsabschnitt (19) verbunden ist, wobei der Rotationsabschnitt (18) und der Übergangsabschnitt (19) eine Ausnehmung (20) bilden.

2. Klinge (9) nach Anspruch 1, **dadurch gekennzeichnet, dass** der Übergangsabschnitt (19) mit einem der Längsenden (13; 17) des Rotationsabschnitts (18) fest verbunden ist.

3. Klinge (9) nach Anspruch 2, **dadurch gekennzeichnet, dass** der Verbindungsabschnitt (16) eine in Form einer Wanne mit gestauchtem Zylinder gepresste Form aufweist.

4. Klinge (9) nach einem der Ansprüche 1 bis 3, **dadurch gekennzeichnet, dass** die proximale Dicke (eₚ) größer als das oder gleich dem 0,33-fachen des Durchmessers (dₗ) der zylindrischen Öffnung (14) ist.

5. Klinge (9) nach einem der Ansprüche 1 bis 4, **dadurch gekennzeichnet, dass** der Verbindungsabschnitt (16) keinen Einschnürungsbereich aufweist.

6. Klinge (9) nach einem der Ansprüche 1 bis 5, **dadurch gekennzeichnet, dass** sie symmetrisch ist, so dass sie unterschiedslos in der einen oder in der anderen Richtung auf der Klingentragwelle (7) angebracht werden kann.

7. Anordnung wenigstens einer Klinge (9) nach den Ansprüchen 1 bis 6 und einer Klingentragwelle (7) für ein motorisiertes Gartengerät, **dadurch gekennzeichnet, dass** sie wenigstens eine zylindrische Auflagefläche (22) umfasst, die geeignet ist, die Befestigung der Klinge (9) im Bereich der Öffnung (14) zu ermöglichen.

8. Anordnung nach Anspruch 7, **dadurch gekennzeichnet, dass** die Auflagefläche (22) die Form einer kreisförmigen Aussparung aufweist.

9. Anordnung nach einem der Ansprüche 7 und 8, **dadurch gekennzeichnet, dass** der Durchmesser der Auflagefläche (22) kleiner als der Durchmesser (dₗ) der Öffnung (14) ist, und dadurch, dass die Differenz zwischen diesen beiden Durchmessern kleiner als oder gleich 0,3 mm ist.

10. Motorisiertes Gartengerät, bei dem wenigstens eine Anordnung nach einem der Ansprüche 7 bis 9 zum Einsatz kommt.

11. Motorisiertes Gartengerät nach Anspruch 10, **dadurch gekennzeichnet, dass** es zu der Gruppe gehört, welche umfasst:
- die Vertikutierer,
- die Grasmähmaschinen,
- die Schlegelmäher,
- die Pflanzenhäcksler,
- die rückentragbaren Freischneider,
- die handgeführten Rasenmäher,
- die Rasenmähtraktoren mit Fahrersitz,
- die Rasenmäher-Roboter.

12. Verfahren zur Herstellung einer Klinge (9) nach einem der Ansprüche 1 bis 8, **dadurch gekennzeichnet, dass** es einen Schritt des Pressens (30) der Klinge (9) umfasst.

13. Verfahren nach Anspruch 12, **dadurch gekennzeichnet, dass** es die folgenden Schritte umfasst, die nacheinander an einem Blech (32) ausgeführt werden:
- Durchbohren (28);
- Vorschneiden (29);
- Pressen (30);
- Trennen (31).

## Claims

1. Blade (9) for motorised farming apparatus, intended to be fitted to a blade shaft (7), having a cylindrical hole (14) defined according to an axis of revolution (X) to be fitted to a pivot shaft, the said blade (9) being one-piece, a connection portion (16) having a contact surface of the perimeter of the said hole (14) being intended to come into direct contact with the said blade shaft (7), the said blade having local extra thickness at the said contact surface, the so-called proximal thickness (e p), relative to the thickness of a working portion (11) of the said blade (9), **characterised in that** the said connection portion (16) comprises a revolution portion (18), defined according to the said axis of revolution (X) and connected to the said working portion (11) with a transition portion (19), the said revolution portion (18) and transition portion (19) forming a clearance (20).

2. Blade (9) according to Claim 1, **characterised in that** the said transition portion (19) is secured to one of the longitudinal ends (13; 17) of the said revolution portion (18).

3. Blade (9) according to Claim 2, **characterised in that** the said connection portion (16) is of a dished shape with backward-formed cylinder.

4. Blade (9) according to any one of Claims 1 to 3, **characterised in that** the said proximal thickness (eₚ) is greater than or equal to 0.33 times the diameter (dₗ) of the said cylindrical hole (14).

5. Blade (9) according to any one of Claims 1 to 4, **characterised in that** the said connection portion (16) does not have any cross sectional contraction zone.

6. Blade (9) according to any of Claims 1 to 5, **characterised in that** it is symmetrical, so as to be capable of being fitted indiscriminately in one direction or the other to the said blade shaft (7).

7. Assembly of at least one blade (9) according to Claims 1 to 6 and of a blade shaft (7) for motorised farming apparatus, **characterised in that** it comprises at least one cylindrical bearing surface (22) suitable for making it possible to fasten the said blade (9) at the said hole (14).

8. Assembly according to Claim 7, **characterised in that** the said bearing surface (22) is in the shape of a circular recess.

9. Assembly according to Claim 7 or 8, **characterised in that** the diameter of the said bearing surface (22) is smaller than the diameter (dₗ) of the said hole (14) and **in that** the difference between these two diameters is less than or equal to 0.3 mm.

10. Motorised farming apparatus using at least one assembly according to any of Claims 7 to 9.

11. Motorised farming apparatus according to Claim 10, **characterised in that** it belongs to the group comprising:
- Scarifiers,
- Cutting deck mowers,
- Flail cutters,
- Plant shredders,
- Back-pack type brush-cutters,
- Walk-behind mowers,
- Ride-on mowing tractors and
- Autonomous mowers.

12. Method of manufacturing a blade (9) according to any one of Claims 1 to 8, **characterised in that** it comprises a stage (30) of dishing the said blade (9).

13. Method according to Claim 12, **characterised in that** it comprises the following stages applied successively to a metal sheet (32):
- Perforation (28);
- Preliminary cutting (29);
- Dishing (30);
- Separation (31).
